# EUROPÄISCHE PATENTSCHRIFT

(11) **EP 2 280 802 B1**
(45) Veröffentlichungstag und Bekanntmachung des Hinweises auf die Patenterteilung: **26.06.2013**
(21) Anmeldenummer: 09745465.6
(22) Anmeldetag: 08.05.2009
(51) Int. Cl.: B23K 31/02

(54) **GESCHWEISSTER KUGELZAPFEN UND HERSTELLUNGSVERFAHREN DAFÜR**
WELDED BALL PIN, AND METHOD FOR THE PRODUCTION THEREOF
PIVOT À ROTULE SOUDÉ ET SON PROCÉDÉ DE PRODUCTION

(30) Priorität: 15.05.2008 DE 202008006650 U
(43) Veröffentlichungstag der Anmeldung: 09.02.2011
(73) Patentinhaber: Ruia Global Fasteners AG, 41462 Neuss (DE)
(72) Erfinder: BONGARTZ, Robert, 41464 Neuss (DE)
(74) Vertreter: Beck, Alexander
(86) Internationale Anmeldenummer: PCT/DE2009/050023
(87) Internationale Veröffentlichungsnummer: WO 2009/138081

(56) Entgegenhaltungen:
- WO-A-2006/042537
- DE-A- 10 205 177
- DE-A- 19 645 410
- DE-A- 19 735 638

## Beschreibung

Die vorliegende Erfindung betrifft geschweißte Kugelzapfen und Verfahren zur Herstellung solcher Kugelzapfen gemäß dem Anspruch 1 und dem Anspruch 5. WO 2006/042537 A offenbart einen Kugelzapfen.

Kugelzapfen werden vorrangig dort eingesetzt, wo ein oder zwei Komponenten beweglich miteinander verbunden werden sollen.

Kugelzapfen bestehen üblicherweise aus einer Kugel und einem Schaft. Bei geschweißten Kugelzapfen sind diese beiden Komponenten, Kugel und Schaft, durch einen Schweißvorgang verbunden. Gemäß dem üblichen Stand der Technik besteht der Schaft, auf dem die Kugel aufgeschweißt wird, aus einem zylindrischen Vollmaterial. Bedingt durch diese Geometrie kommt es bei geschweißten Kugelzapfen gemäß dem Stand der Technik im Übergang zwischen Kugel und Schaft im Bereich der Schweißnaht bei Wechselbiegebelastungen zu erhöhten Spannungswerten. Dadurch besteht im Stand der Technik ein hohes Risiko eines Bruches der Schweißnaht im Übergangsbereich, was zu einem Totalschaden des geschweißten Kugelzapfens führt.

Hinsichtlich solcher Kugelzapfen wurde schon früher versucht, ein Brechen der Schweißnaht zwischen Kugel und Schaft zu verhindern. Dazu hat beispielsweise die DE-OS 23 00 670 vorgeschlagen, Kugel und Schaft gemeinsam aus je zwei Hälften herzustellen, wobei eine Hälfte jeweils eine Halbkugel und eine Hälfte des hohlen Schaftes umfasste, und die beiden Hälften dann durch Schweißen verbunden wurden.

Dieses Verfahren wies jedoch den Nachteil auf, dass die Rundheit der Kugel danach durch die umlaufende Schweißnaht beeinträchtigt war. Diese Lösung war außerdem deshalb nicht Ziel führend, da das entsprechende Verschweißen der Hälften sehr aufwändig war.

Aus der DD 278 175 A1 ist es weiterhin bekannt, die Kugel mit einem scheibenförmigen Ansatz zu versehen, und erst an diesem Ansatz einen entsprechenden hohlzylindrischen Schaft anzubringen. Dies erfordert jedoch eine aufwändige Herstellung der mit einem scheibenförmigen Ansatz versehenen Kugel.

Eine ähnliche Lösung ist aus der DE 856 256 bekannt, dort sind die Kugeln mit einem hohlen Ansatz versehen, dessen Durchmesser dem daran anschließenden Schaft entspricht, der ebenfalls hohl ausgebildet ist. Dies hat jedoch eine sehr aufwändige Fertigung zur Folge, da eine genaue Ausrichtung der Kugel mit dem hohlen Ansatzstück gegenüber dem Schaft erforderlich ist.

DE 197 35 638 A1 zeigt bereits ein Verfahren zur Herstellung eines Kugelzapfens sowie einen entsprechenden Kugelzapfen, wobei der hergestellte Kugelzapfen einen im wesentlichen kugelförmigen oberen Bereich und einen im wesentlichen stabförmigen unteren Bereich aufweist. Dort muss jedoch das im wesentlichen kugelförmige Element mit einer geeigneten ersten Kontaktfläche und der stabförmige Bereich mit einer geeigneten zweiten Kontaktfläche versehen sein, damit diese Kontaktflächen hernach durch Reibschweißen miteinander verbunden werden können. Auch dies erhöht den Aufwand, insbesondere bei der Herstellung des Schaftes, der mit einer entsprechenden Wölbung versehen sein muss, wobei bei der Verwendung von Kugeln unterschiedlichen Durchmessers auch jeweils eine andere Kontaktfläche hergestellt werden muss.

Aufgabe der vorliegenden Erfindung ist es daher, einen solchen geschweißten Kugelzapfen dergestalt zu verbessern, dass er sehr einfach herzustellen ist und die Schweißnaht nicht mehr so hoch beansprucht werden muss und das Risiko entsprechender Brüche herabgesetzt ist und ein verbessertes Herstellungsverfahren dafür anzugeben.

Erfindungsgemäß wurde die Geometrie des Schaftes entsprechend diesen Anforderungen neu konstruiert. Erfindungsgemäß ergab sich die Aufführung des Schaftes als Hohlzylinder.

Der Hohlzylinder vermag die Beanspruchungen zwischen Kugel und Schaft teilweise elastisch aufzunehmen, er wirkt hierbei wie eine Feder und vermindert daher die Spannungswerte in der Schweißnaht. Auf diese Weise wird Haltbarkeit und Belastbarkeit der Schweißnaht erheblich erhöht. Angenehmer Nebeneffekt ist eine erhebliche Verringerung des Gewichtes des geschweißten Kugelzapfens.

Durch die erfindungsgemäße Gestaltung mit einem hohlen Schaft werden die Spannungen von der Schweißnaht in den Schaft verlagert, der hierbei wie eine Feder wirken kann. Hierdurch wird der erfindungsgemäße geschweißte Kugelzapfen bei Wechselbiegebelastung nicht mehr hauptsächlich im Bereich der Schweißnaht belastet, sondern es kommt zu einer dynamischen Wechselbelastung im gesamten Schaftbereich. Dadurch wird einer Rissbildung in der Schweißnaht im Kugel-Schaft-Übergang entgegengewirkt.

Besonders bevorzugt ist es dabei, die Innenwand des Schaftes mit parallel zur Rotationsachse des Schaftes verlaufenden Nuten zu versehen. Auf diese Weise kann der Faserverlauf im Material des Schaftes parallel ausgerichtet werden und somit die Elastizität und Biegewechselfestigkeit des Schaftes weiter verbessert werden.

Besonders bevorzugt ist es dabei, wenn die Tiefe der Nuten größer als die halbe Wandstärke des hohlzylindrischen Schaftes ist.

Weiter ist es bevorzugt, dass die Nuten einen halbkreisförmigen Querschnitt aufweisen. Auch hierdurch wird die Elastizität des Schaftes verbessert.

Weiter ist es bevorzugt, dass sich die Nuten nahezu über die gesamte Länge des hohlzylindrischen Schaftes erstrecken. Auch hierdurch wird die Elastizität erhöht und die Belastung der Schweißnaht verringert.

Die erfindungsgemäße Aufgabe wird des weiteren durch ein Verfahren zur Herstellung eines solchen Kugelzapfens gelöst, bei dem als Schaft ein Hohlzylinder an die Kugel angeschweißt wird.

Besonders bevorzugt ist es dabei, wenn an der Innenwand des Schaftes parallel zur Rotationsachse des Schaftes verlaufende Nuten angebracht werden.

Dabei ist es besonders bevorzugt, wenn die Tiefe der Nuten größer als die halbe Wandstärke des Schaftes ausgebildet wird.

Vorzugsweise werden die Nuten dabei mit einem halbkreisförmigen Querschnitt ausgebildet.

Besonders bevorzugt ist es dabei, wenn die Nuten fast über die ganze Länge des Schaftes angebracht werden.

Die vorliegende Erfindung wird im Folgenden anhand der in den Figuren dargestellten Ausführungsbeispiele näher erläutert. Es zeigt:
Figur 1 eine räumliche Explosionszeichnung eines erfindungsgemäßen geschweißten Kugelzapfens;
Figur 2 eine Schnittdarstellung des Schaftes des geschweißten Kugelzapfens der Figur 1; und
Figur 3 eine weitere Ausgestaltungsform des Schaftes für einen erfindungsgemäßen geschweißten Kugelzapfen.

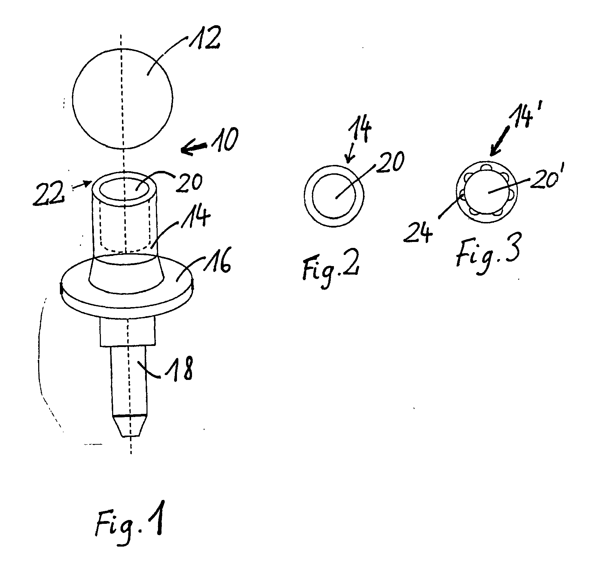

Figur 1 zeigt einen erfindungsgemäßen geschweißten Kugelzapfen räumlich dargestellt in Form einer Explosionszeichnung (vor dem Verschweißen von Kugel und Schaft).

Der erfindungsgemäße geschweißte Kugelzapfen 10 umfasst eine Kugel 12, die auf einen Schaft 14 aufgeschweißt wird. Der Schaft 14 geht sodann in einen Kraftangriff 16 und einen Außengewindeträger 18 über. Diese Teile werden hier nicht näher beschrieben, da sie den Ausführungsformen im Stand der Technik entsprechen können und nicht wesentlich zum Gegenstand der vorliegenden Erfindung beitragen.

Erfindungsgemäß ist der Schaft 14 jedoch als Hohlzylinder mit einem inneren zylindrischen Hohlraum 20 ausgebildet. Die Verschweißung zwischen Kugel 12 und Schaft 14 erfolgt somit lediglich in den ringförmigen Bereich 22, in dem der hohlzylindrische Schaft 14 die Kugel 12 berührt. Dennoch ist die vorliegende Konstruktion deutlich haltbarer als der Stand der Technik, bei dem ein Schaft 14 aus Vollmaterial vorgesehen ist. Erfindungsgemäß weist der Schaft 14 durch seine Gestaltung als Hohlzylinder nämlich eine nicht unwesentliche Elastizität auf, durch die die Belastung der Schweißnaht zwischen Kugel 12 und Schaft 14 erheblich vermindert werden kann.

Figur 2 zeigt eine Schnittdarstellung des Schaftes 14, der konzentrische innere Hohlraum 20 ist deutlich erkennbar.

Figur 3 zeigt eine weitere erfindungsgemäße Ausgestaltung des Schaftes 14', bei dem die innere Mantelfläche des hohlzylindrischen Schaftes 14' mit parallel zur Rotationsachse des Schaftes 14' verlaufenden Nuten 24 versehen ist.

Um eine besonders gute Elastizität des Schaftes 14' und damit eine möglichst starke Entlastung der Schweißnaht zwischen Kugel 12 und Schaft 14' zu erzielen, ist es bevorzugt, wenn die Tiefe der Nuten 24 größer ist als die halbe Wandstärke des hohlzylindrischen Schaftes 14'.

Besonders bevorzugt ist es dabei, wenn die Nuten 24 einen halbkreisförmigen Querschnitt aufweisen. Dies erleichtert die Fertigung und verringert Spannungsspitzen in der Wand des Schaftes 14', wenn dieser Schaft 14' federnd Belastungen der Schweißnaht zwischen Kugel 12 und Schaft 14' aufnimmt.

Besonders bevorzugt ist es dabei, wenn sich die Nuten 24 nahezu über die ganze Länge des hohlzylindrischen Schaftes 14' erstrecken. Die Länge der Nuten 24 kann jedoch in einem weiten Bereich entsprechend den fertigungstechnischen Notwendigkeiten gewählt werden, ohne große Verluste bei der erfindungsgemäß gewünschten Elastizität des Schaftes 14' hinnehmen zu müssen.

Erfindungsgemäß wird somit ein geschweißter Kugelzapfen 10 geschaffen, der einerseits ein geringeres Gewicht aufweist als die geschweißten Kugelzapfen des Standes der Technik und andererseits eine spürbare Entlastung der Schweißnaht zwischen Kugel 12 und Schaft 14, 14' ermöglicht.

## Patentansprüche

1. Geschweißter Kugelzapfen (10) mit einem Schaft (14, 14'), auf dem eine vollständige, geschlossene Kugel (12) aufgeschweißt ist, **dadurch gekennzeichnet, dass** der Schaft (14') als Hohlzylinder ausgebildet ist, dass die Verschweißung zwischen Kugel (12) und Schaft (14) lediglich in dem ringförmigen Bereich (22) erfolgt, in dem der hohlzylindrische Schaft (14) die Kugel (12) berührt, wobei die Innenwand des Schafts (14, 14') mit parallel zur Rotationsachse des Schafts (14, 14') verlaufenden Nuten (24) versehen ist.

2. Geschweißter Kugelzapfen (10) nach Anspruch 1, **dadurch gekennzeichnet, dass** die Tiefe der Nuten (24) größer als die halbe Wandstärke des hohlzylindrischen Schafts (14') ist.

3. Geschweißter Kugelzapfen (10) nach Anspruch 1 oder 2, **dadurch gekennzeichnet, dass** die Nuten (24) einen halbkreisförmigen Querschnitt aufweisen.

4. Geschweißter Kugelzapfen (10) nach Anspruch 1, 2 oder 3, **dadurch gekennzeichnet, dass** sich die Nuten (24) nahezu über die ganze Länge des hohlzylindrischen Schafts (14') erstrecken.

5. Verfahren zur Herstellung eines aus einer vollständigen, geschlossenen Kugel (12) und einem Schaft (14, 14') bestehenden Kugelzapfens (10), **dadurch gekennzeichnet, dass** als Schaft (14, 14') ein Hohlzylinder an die Kugel (12) angeschweißt wird, dass die Verschweißung zwischen Kugel (12) und Schaft (14) lediglich in dem ringförmigen Bereich (22) erfolgt, in dem der hohlzylindrische Schaft (14, 14') die Kugel (12) berührt, wobei und an der Innenwand des Schaftes (14') parallel zur Rotationsachse des Schaftes (14') verlaufende Nuten (24) angebracht werden.

6. Verfahren nach Anspruch 5, **dadurch gekennzeichnet, dass** die Tiefe der Nuten (24) größer als die halbe Wandstärke des Schaftes (14') ausgebildet wird.

7. Verfahren nach Anspruch 5 oder 6, **dadurch gekennzeichnet, dass** die Nuten (24) mit einem halbkreisförmigen Querschnitt ausgebildet werden.

8. Verfahren nach Anspruch 5, 6 oder 7, **dadurch gekennzeichnet, dass** die Nuten (24) fast über die ganze Länge des Schaftes (14') angebracht werden.

## Claims

1. A welded ball pin (10), comprising: a shaft (14, 14') on which a completely closed ball (12) is welded, **characterized in that** the shaft (14, 14') is configured as a hollow cylinder in such a way, that the weld between ball (12) and shaft (14) is formed only in the ring-shaped region (22), in which the hollow-cylindrical shaft (14) touches the ball (12), wherein the inner wall of the shaft (14, 14') is provided with grooves (24) extending parallel to a rotation axis of the shaft (14; 14').

2. The welded ball pin (10) according to claim 1, **characterized in that** the depth of the grooves (24) is greater than half a wall thickness of the hollow cylindrical shaft (14').

3. The welded ball pin (10) according to claim 1 or 2, **characterized in that** the grooves (24) have a hollow cylindrical cross section.

4. The welded ball pin (10) according to claim 1, 2 or 3, **characterized in that** the grooves (24) extend almost over the entire length of the hollow cylindrical shaft (14').

5. A method for producing a ball pin (10) including a completely closed ball (12) and a shaft (14, 14'), **characterized in that** as a shaft (14, 14') a hollow cylinder is welded to a ball (12) in such a way, that the weld between ball (12) and shaft (14) is formed only in the ring-shaped region (22), in which the hollow-cylindrical shaft (14, 14') touches the ball (12), wherein grooves (24) extending parallel to a rotation axis of the shaft (14') were formed at an inner wall of the shaft (14').

6. The method according to claim 5, **characterized in that** the depth of the grooves (24) is configured greater than half a wall thickness of the shaft (14').

7. The method according to claim 5 or 6, **characterized in that** the grooves (24) are configured with a semi circular cross section.

8. The method according to claim 5, 6 or 7, **characterized in that** the grooves (24) are applied almost over an entire length of the shaft (14').

## Revendications

1. Pivot à rotule soudé (10) avec une tige (14, 14') sur laquelle une sphère entière et fermée (12) est soudée, **caractérisé en ce que** la tige (14') est conçue comme un cylindre creux et **en ce que** la soudure entre la sphère (12) et la tige (14) est effectuée simplement dans la zone annulaire (22) dans laquelle la tige cylindrique creuse (14) est en contact avec la sphère (12), la paroi intérieure de la tige (14, 14') étant munie de rainures (24) s'étendant parallèlement à l'axe de rotation de la tige (14, 14').

2. Pivot à rotule soudé (10) selon la revendication 1, **caractérisé en ce que** la profondeur des rainures (24) est supérieure à la moitié de l'épaisseur de paroi de la tige cylindrique creuse (14').

3. Pivot à rotule soudé (10) selon la revendication 1 ou 2, **caractérisé en ce que** les rainures (24) ont une section transversale en forme de demi-cercle.

4. Pivot à rotule soudé (10) selon la revendication 1, 2 ou 3, **caractérisé en ce que** les rainures (24) s'étendent presque sur toute la longueur de la tige cylindrique creuse (14').

5. Procédé de fabrication d'un pivot à rotule (10) constitué d'une sphère entière et fermée (12) et d'une tige (14, 14'), **caractérisé en ce qu'**un cylindre creux est soudé en tant que tige (14, 14') à la sphère (12) et **en ce que** la soudure entre la sphère (12) et la tige (14) est effectuée simplement dans la zone annulaire (22) dans laquelle la tige cylindrique creuse (14,14') est en contact avec la sphère (12), des rainures (24) qui s'étendent parallèlement à l'axe de rotation de la tige (14') étant réalisées sur la paroi intérieure de la tige (14').

6. Procédé selon la revendication 5, **caractérisé en ce que** la profondeur des rainures (24) est conçue supérieure à la moitié de l'épaisseur de paroi de la tige (14').

7. Procédé selon la revendication 5 ou 6, **caractérisé en ce que** les rainures (24) sont conçues avec une section transversale en forme de demi-cercle.

8. Procédé selon la revendication 5, 6 ou 7, **caractérisé en ce que** les rainures (24) sont réalisées presque sur toute la longueur de la tige (14').
